# FASCICULE DE BREVET EUROPEEN

(11) **EP 0 459 903 B1**
(45) Date de publication et mention de la délivrance du brevet: **29.03.1995**
(21) Numéro de dépôt: 91401403.0
(22) Date de dépôt: 30.05.1991
(51) Int. Cl.: E01H 1/08

(54) **Assemblage de modules et d'arceaux formant un chassis de véhicule léger du type minibalayeuse**
Zusammenbau von Modulen und Rahmenteilen, die ein Chassis eines leichten Fahrzeuges vom Typ einer kleinen Strassenkehrmaschine bilden
Assembly of modules and frame parts constituting a chassis of a light-weight vehicle such as a small road sweeping machine

(30) Priorité: 31.05.1990 FR 9006775
(43) Date de publication de la demande: 04.12.1991
(73) Titulaire: Société à Responsabilité Limitée dite: MICROVOIRIE, F-95480 Pierrelaye (FR)
(72) Inventeur: Budet,Hervé, F-95300 Pontoise (FR); Garralon,Pierre, F-95690 Nesle la Vallée (FR)
(74) Mandataire: Lhuillier, René

(56) Documents cités:
- FR-A- 2 555 555
- FR-A- 2 584 435

## Description

L'invention qui se rapporte aux véhicules légers du type des minibalayeuses concerne plus précisément le châssis dudit véhicule, agencé par l'assemblage de modules et d'arceaux.

Pour le nettoyage des sols et l'aspiration des poussières, les véhicules lourds utilisés sont en fait des camions, aménagés en conséquence, dont le châssis est constitué de longerons et de traverses reposant sur les trains de roues et recevant la benne et les différents mécanismes. Des balayeuses plus légères telles que celle décrite dans le FR-A-2 555 555 sont également construites à l'aide d'un châssis classique, sur lequel reposent ou auquel sont suspendus le moteur, la carosserie et les équipements. Quand on cherche à réaliser un appareil léger, c'est-à-dire ayant un empattement et un poids aussi réduits que possible, il serait évidemment avantageux, pour gagner du volume utile et pour limiter le poids de ne pas utiliser ce châssis habituel, mais un caisson autoporteur plus léger comme cela existe pour quelques véhicules. Néanmoins un caisson autoporteur principal est de fabrication délicate et ne favorise pas l'accessibilité et l'interchangeabilité des divers éléments.

Dans le cas des minibalayeuses qui doivent être très maniables, et donc avoir des dimensions, aussi bien en largeur qu'en longueur, aussi faibles que possible, sans pour autant que leur puissance et leur efficacité soient diminuées, l'agencement et le montage du moteur, des réservoirs divers, de la turbine, ainsi que les divers équipements et la carrosserie, doivent donc être déterminés avec précision.

C'est un des mérites de la présente invention d'avoir justement mis au point un véhicule de ce genre dans lequel une pluralité de modules et d'arceaux, judicieusement assemblés les uns aux autres, tout en gardant chacun leurs fonctions particulières réalisent le squelette autoporteur général de l'engin, sans faire usage d'un châssis traditionnel.

Aussi un objet principal de la présente invention consiste en un procédé d'assemblage de modules applicable à la formation du squelette ou châssis d'un véhicule léger du type d'une minibalayeuse dont les différents modules sont reliés entre eux, et comportant un moteur, des réservoirs, une turbine d'aspiration et un séparateur d'air, ainsi que des équipements divers, procédé qui consiste à juxtaposer des modules ayant chacun leur fonction propre qui sont constitués des éléments ou équipements du véhicule, chaque module formant un maillon relié ou servant de support à au moins deux modules voisins.

Selon une caractéristique particulière de l'invention l'armature formant la base du véhicule obtenu par ledit procédé est constituée d'un réservoir hydraulique formant un module intermédiaire fixé à un caisson avant en appui sur des roues directrices et à un berceau aux extrémités duquel sont montées des roues arrières.

Avantageusement le caisson avant est réalisé par assemblage de tôles pliées délimitant un compartiment fermé au moins sur sa face avant par un calandre amovible, et le réservoir hydraulique dispose d'un prolongement latéral en direction de l'arrière qui en augmente la capacité tandis que de l'autre côté s'étend vers l'arrière une simple plaque verticale renforcée.

Selon l'invention, le moteur qui repose sur le berceau constitue un module intermédiaire entre ledit berceau et un module constitué par le séparateur d'air et son support. Ledit support a la forme d'une potence en V qui sert aussi de support à la turbine elle-même fixée aussi au réservoir hydraulique.

En outre une colonne de direction est montée sur le caisson avant et sert de support à un réservoir d'eau occupant une position inclinée sur le côté du véhicule, un arceau de cabine reposant sur le caisson avant et sur un autre arceau dont les pieds prennent appui respectivement sur le réservoir d'eau et sur le berceau.

D'autres caractéristiques particulières et avantages de l'invention seront mieux compris à la lecture de la description suivante d'une forme de réalisation prise à titre d'exemple, et faisant référence aux dessins annexés qui représentent :
figure 1 une vue éclatée en perspective des différents modules et arceaux de l'invention
figure 2 une vue du véhicule résultant de l'assemblage des modules.

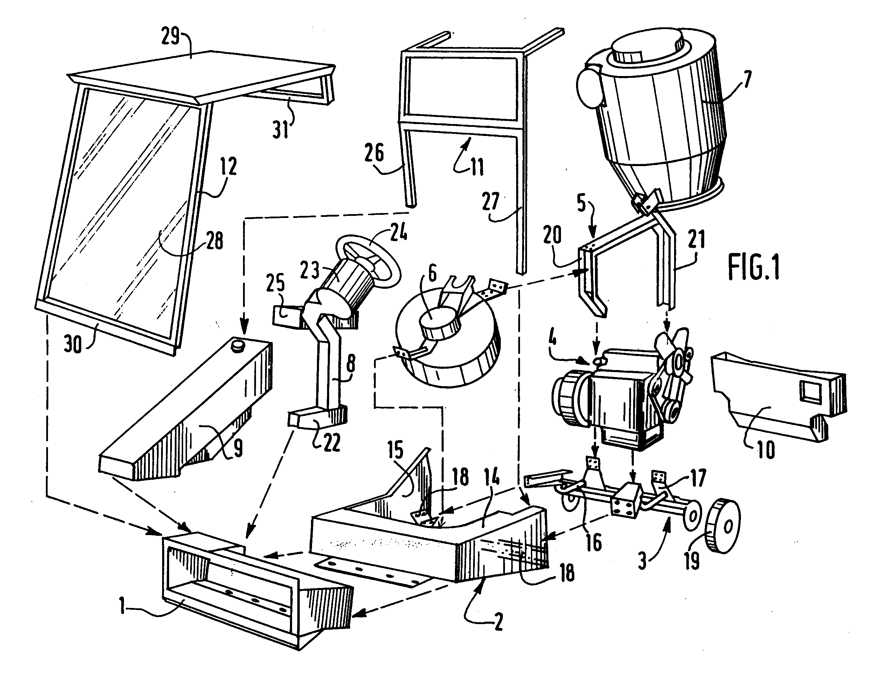

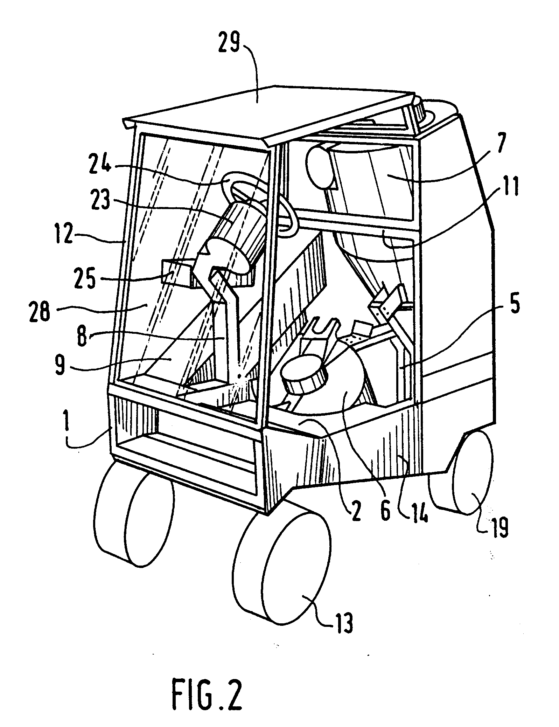

On voit à la figure 1 un certain nombre d'éléments particuliers dont l'assemblage permet d'obtenir le véhicule léger représenté à la figure 2.

On voit tout d'abord un caisson avant 1 se présentant sensiblement comme une boite parallélépipédique horizontale qui s'étend sur toute la largeur du véhicule, à l'avant, juste au dessus et en appui sur les roues directrices 13. La boîte est par exemple réalisée par assemblage de tôles pliées délimitant un compartiment intérieur fermé au moins sur sa face avant par une calandre amovible. Ce caisson 1 sert de logement notamment aux mécanismes de commande de direction des roues avant 13 et aux boîtiers de connexion électrique.

L'arrière du caisson 1 est directement assemblé à un réservoir hydraulique 2 destiné à contenir l'huile de réserve pour l'alimentation des circuits et des moteurs hydrauliques. La face avant du réservoir correspond en dimensions à la face arrière du caisson. Le réservoir est asymétrique car un prolongement latéral 14, en direction de l'arrière en augmente la capacité. De l'autre côté, par contre, s'étend vers l'arrière une simple plaque verticale renforcée 15. L'ensemble que constitue le réservoir et ladite plaque présente par conséquent une ouverture orientée vers l'arrière qui sert de logement à un berceau 3 destiné à supporter le moteur 4 du véhicule. Le berceau est une simple traverse encadrée de jambes d'appui (16,17). D'un côté deux jambes d'appui 16 sont fixées à des semelles support 18 prévues aux extrémités du réservoir 14 et de la plaque 15. Le moteur 4 destiné à produire l'énergie et entraîner la pompe hydraulique, repose donc sur les jambes d'appui 16 et 17 et se trouve à peu près centré sur la traverse aux extrémités de laquelle sont fixées les roues arrière 19 du véhicule. Le moteur 4 constitue un module intermédiaire entre le berceau et un module constitué par un séparateur d'air 7 et son support 5. Plus précisément le support 5 est une potence en forme de V dont les bras (20,21) prennent appui sur le berceau et le moteur. En direction de l'avant du véhicule, un bras 20 de la potence sert de point d'appui à une turbine 6 qui est également fixée, par l'avant, au réservoir 2.

C'est le bras arrière 21 de la potence 5 qui sert de support au séparateur d'air 7 appelé aussi cyclone, ayant pour fonction la séparation et le recueil des déchets dans un sac plastique.

Une colonne de direction 8 est montée, par l'intermédiaire d'un sabot 22 prévu à sa base, sur le caisson avant 1. La colonne se développe vers le haut jusqu'à une pompe de direction 23 terminée par un volant 24 et porte aussi une console de commande et de contrôle 25. Cette colonne sert aussi de support à un réservoir d'eau 9 de forme sensiblement trapézoïdale qui occupe une position inclinée sur le côté du véhicule. Ledit réservoir repose par sa base sur le caisson 1 et se fixe au sabot de la colonne de direction. Son extrémité supérieure est rendue solidaire d'un arceau 11 par l'intermédiaire d'un de ses pieds verticaux 26, l'autre pied 27 trouvant son appui sur le caisson 2. L'arceau 11, à sa partie supérieure, fait retour vers l'arrière pour servir de support au cyclone 7.

Un autre arceau plus enveloppant est l'arceau de cabine 12 ; il sert de support à un pare brise avant 28 et à un pavillon de cabine 29. Il repose par une cornière inférieure 30 sur le caisson avant 1 et par une cornière supérieure 31 sur l'arceau 11. Enfin, un réservoir de combustible 10 est rapporté à l'arrière, sur le berceau 3 et la potence 5. Les arceaux 11, 12 constituent des éléments complémentaires aux modules précédemment décrits, en assurant le renforcement de la partie supérieure du véhicule.

On voit que chacun des modules ainsi décrits, qui a une fonction propre bien particulière constitue aussi un maillon contribuant à l'assemblage de l'ensemble, chaque module étant lié, ou servant de support à au moins deux modules voisins comme le montrent les liaisons en pointillé de la figure 1.

Ainsi le réservoir 2 sert de module intermédiaire entre le caisson avant 1 et le berceau 3. Les jambes d'appui 16 du berceau étant solidement fixées aux semelles 18 du réservoir, lequel réservoir étant lui-même raccordé par quelques points de liaison au caisson avant; ces trois modules assemblés constituent en quelque sorte le plancher rigide ou l'armature de base du véhicule. Sur ces trois modules reposent les autres équipements ou éléments constitutifs de la minibalayeuse qui, eux aussi, sont chacun reliés à d'autres modules ou d'autres arceaux. Ainsi le moteur 4 formant entretoise, logé dans le berceau 3 sert de support au module constitué du séparateur d'air 7 et de sa potence support 5. La turbine 6, dont la fonction propre est l'aspiration et le transport des déchets vers le cyclone 7, assure la liaison entre le réservoir 4 et la potence 5, et contribue ainsi à rigidifier la partie arrière du véhicule. Ce rôle n'est pas négligeable car on a vu que la potence 5 constituait le support du module séparateur d'air 7

D'autre part les arceaux 11 et 12 formant en quelque sorte le squelette des superstructures du véhicule, sont imbriqués ensemble et prennent appui sur les trois modules inférieurs que constituent le caisson 1, le réservoir 2 et le berceau 3. Ils maintiennent en place également la colonne de direction 8 et le réservoir d'eau 9.

L'assemblage de ces différents modules et arceaux réalise donc l'armature et le châssis du véhicule sans nécessiter l'apport de longerons ou de traverses particuliers, d'où gain de poids et de place. En outre chaque élément est aisément accessible ou démontable.

L'invention ne se limite pas à l'exemple de réalisation décrit, mais en englobe toutes les variantes constructives, telles que décrites dans les revendications.

## Revendications

1. Procédé d'assemblage de modules applicable à la formation du squelette ou châssis d'un véhicule léger du type d'une minibalayeuse dont les différents modules sont reliés entre eux, et comportant un moteur (4), des réservoirs (2, 9), une turbine d'aspiration (6) et un séparateur d'air (7), ainsi que des équipements divers, caractérisé en ce qu'il consiste à juxtaposer les modules ayant chacun leur fonction propre et constitués des éléments ou équipements du véhicule, chaque module formant un maillon relié ou servant de support à au moins deux modules voisins.

2. Véhicule léger du type minibalayeuse obtenu selon le procédé de la revendication 1, et comportant un moteur (4), des réservoirs (2, 9), une turbine d'aspiration (6) et un séparateur d'air (7), ainsi que des équipements divers, caractérisé en ce que l'armature formant la base du véhicule est constituée d'un réservoir hydraulique (2) formant un module intermédiaire fixé à un caisson avant (1) en appui sur des roues directrices (13) et à un berceau (3) aux extrémités duquel sont montées des roues arrières (19).

3. Véhicule léger selon la revendication 2, caractérisé en ce que le caisson avant (1) est réalisé par assemblage de tôles pliées délimitant un compartiment fermé au moins sur sa face avant par une calandre amovible.

4. Véhicule léger selon la revendication 2, caractérisé en ce que le réservoir hydraulique (2) dispose d'un prolongement latéral (14) en direction de l'arrière qui en augmente la capacité tandis que de l'autre côté s'étend vers l'arrière une simple plaque verticale renforcée (15).

5. Véhicule léger selon la revendication 4, caractérisé en ce que le berceau (3) est formé d'une traverse encadrée de jambes d'appui (16, 17), dont deux jambes d'appui (16) d'un même côté, sont fixées à des semelles support (18) prévues aux extrémités du réservoir (14) et de la plaque (15).

6. Véhicule léger selon la revendication 5, caractérisé en ce que le moteur (4) reposant sur le berceau (3) constitue un module intermédiaire entre ledit berceau et un module constitué par le séparateur d'air (7) et une potence (5) lui servant de support.

7. Véhicule léger selon la revendication 6, caractérisé en ce que le support (5) du séparateur d'air (7) a la forme d'une potence en forme de V dont les bras (20, 21) prennent appui sur le berceau et le moteur.

8. Véhicule léger selon les revendications 6 ou 7, caractérisé en ce que la potence (5) servant de support au séparateur d'air (7) sert aussi de support à la turbine (6) qui est elle-même fixée au réservoir hydraulique (2).

9. Véhicule léger selon la revendication 2, caractérisé en ce qu'une colonne de direction (8) est montée sur le caisson avant (1) et sert de support à un réservoir d'eau (9) occupant une position inclinée sur le côté du véhicule.

10. Véhicule léger selon la revendication 2, caractérisé en ce que des arceaux (11, 12) constituent des éléments complémentaires auxdits modules pour le renforcement de la partie supérieure du véhicule.

11. Véhicule léger selon les revendications 2 à 10, caractérisé en ce qu'un arceau de cabine (12) repose sur le caisson avant (1) et sur un autre arceau (11) dont les pieds prennent appui respectivement sur le réservoir d'eau (9) et sur le berceau (3).

## Claims

1. Assembly process for modules appropriate to form the skeleton or chassis of a lightweight vehicle of the mini road sweeper type, of which the various modules are connected between themselves and comprising an engine (4), reservoirs (2, 9), a suction turbine (6) and an air separator (7), as well as various equipment, characterised in that it consists in juxtaposing the modules, each having its own particular function and constituting elements or equipment of the vehicle, each module forming a link connected to or serving as support to at least two neighbouring modules.

2. Light vehicle of the mini road sweeper type obtained according to the process of claim 1 and comprising an engine (4), reservoirs (2, 9), a suction turbine (6) and an air separator (7), as well as various equipment, characterised in that the framework forming the base of the vehicle is constituted by a hydraulic reservoir (2) forming an intermediate module fixed to a front box (1) supported on steerable wheels (13) and to a support (3) on the ends of which some rear wheels (19) are mounted.

3. Light vehicle according to claim 2, characterised in that the front box (1) is formed by assembly of folded metal sheets defining a compartment closed at least on its front face by a removable grille.

4. Light vehicle according to claim 2, characterised in that the hydraulic reservoir (2) has a lateral extension (14) in the direction towards the rear which increases its capacity while on the other side a simple vertical reinforced plate (15) extends towards the rear.

5. Light vehicle according to claim 4, characterised in that the support (3) is formed by a cross-member flanked by support arms (16, 17) of which two support arms (16) on the same side are fixed to some support feet (18) provided on the ends of the reservoir (14) and of the plate (15).

6. Light vehicle according to claim 5, characterized in that the engine (4) resting on the support (3) constitutes a module intermediate between the said support and a module constituted by the air separator (7) and a bracket (5) serving as its support.

7. Light vehicle according to claim 6, characterised in that the support (5) for the air separator (7) has the form of a bracket in the shape of a V, the arms (20, 21) of which come to bear on the support and the engine.

8. Light vehicle according to claims 6 or 7, characterised in that the bracket (5) serving as a support for the air separator (7) also serves to support the turbine (6) which is itself fixed to the hydraulic reservoir (12).

9. Light vehicle according to claim 2, characterised in that a steering column (8) is mounted on the front box (1) and serves as a support for a water reservoir (9) occupying an inclined position on the side of the vehicle.

10. Light vehicle according to claim 2, characterised in that struts (11, 12) constituting elements complementary to the said modules for the reinforcement of the upper part of the vehicle.

11. Light vehicle according to claims 2 to 10, characterised in that one cabin arch (12) rests on the front box (1) and on another arch (11), the feet of which come to bear respectively on the water reservoir (9) and on the support (3).

## Patentansprüche

1. Verfahren zum Zusammenbau von Modulen, das zur Bildung eines Skeletts oder Chassis eines leichten Fahrzeuges nach Art einer kleinen Straßenkehrmaschine verwendbar ist, deren verschiedene Module miteinander verbunden sind und einen Motor (4), Behälter (2, 9), eine Ansaugturbine (6) und einen Luftabscheider (7) sowie verschiedene Ausrüstungen umfassen, dadurch gekennzeichnet, daß das Verfahren darin besteht, die jeweils eine eigene Funktion aufweisenden und Elemente oder Ausstattungen des Fahrzeugs bildenden Module aneinander zu reihen, wobei jedes Modul ein Glied bildet, das verbunden ist mit oder als Abstützung dient für mindestens zwei benachbarte Module.

2. Leichtes Fahrzeug vom Typ einer kleinen Straßenkehrmaschine, erhalten nach dem Verfahren gemäß Anspruch 1 und umfassend einen Motor (4), Behälter (2, 9), eine Ansaugturbine (6) und einen Luftabscheider (7), sowie verschiedene Ausrüstungen, dadurch gekennzeichnet, daß der den Boden des Fahrzeugs bildende Träger durch einen Hydraulikbehälter (2) gebildet ist, der ein Zwischenmodul bildet, das an einem vorderen Kasten (1) unter Abstützung auf Lenkrädern (13) und an einem Untergestell (3) befestigt ist, an dessen Enden Hinterräder (19) montiert sind.

3. Leichtes Fahrzeug nach Anspruch 2, dadurch gekennzeichnet, daß der vordere Kasten (1) durch Zusammenbau von gebogenen Blechen verwirklicht ist, die ein zumindest auf seiner vorderen Seite durch eine abnehmbare Kühlerhaube verschlossenes Abteil begrenzen.

4. Leichtes Fahrzeug nach Anspruch 2, dadurch gekennzeichnet, daß der Hydraulikbehälter (2) eine seitliche Verlängerung (14) in Richtung der Rückseite aufweist, die den Rauminhalt vergrößert, während sich auf der anderen Seite eine einfache vertikale verstärkte Platte (15) nach hinten erstreckt.

5. Leichtes Fahrzeug nach Anspruch 4, dadurch gekennzeichnet, daß das Untergestell (3) aus einer Traverse gebildet ist, die von Stützstreben (16, 17) umrahmt ist, wobei zwei auf der gleichen Seite liegende Stützstreben (16) an Trageplatten (18) befestigt sind, die an den Enden des Behälters (14) und der Platte (15) vorgesehen sind.

6. Leichtes Fahrzeug nach Anspruch 5, dadurch gekennzeichnet, daß der Motor (4), der auf dem Untergestell (3) ruht, ein Zwischenmodul bildet zwischen dem Untergestell und einem Modul, das durch den Luftabscheider (7) und einen Träger (5) gebildet ist, der diesem als Abstützung dient.

7. Leichtes Fahrzeug nach Anspruch 6, dadurch gekennzeichnet, daß der Träger (5) des Luftabscheiders (7) die Form eines V-förmigen Trägers aufweist, dessen Arme (20, 21) sich auf dem Untergestell und dem Motor abstützen.

8. Leichtes Fahrzeug nach den Ansprüchen 6 oder 7, dadurch gekennzeichnet, daß der Träger (5), der als Abstützung für den Luftabscheider (7) dient, auch als Abstützung für die Turbine (6) dient, die selbst am Hydraulikbehälter (2) befestigt ist.

9. Leichtes Fahrzeug nach Anspruch 2, dadurch gekennzeichnet, daß eine Lenksäule (8) auf dem vorderen Kasten (1) montiert ist und als Abstützung für einen Wasserbehälter (9) dient, der an der Seite des Fahrzeugs eine geneigte Position einnimmt.

10. Leichtes Fahrzeug nach Anspruch 2, dadurch gekennzeichnet, daß Rahmenteile (11, 12) zur Verstärkung des oberen Teils des Fahrzeugs Komplementärelemente für die Module bilden.

11. Leichtes Fahrzeug nach den Ansprüchen 2 bis 10, dadurch gekennzeichnet, daß ein Kabinenrahmenteil (12) auf dem vorderen Kasten (1) und auf einem anderen Rahmenteil (11) ruht, dessen Füße sich auf dem Wasserbehälter (9) bzw. auf dem Untergestell (3) abstützen.
